# EUROPEAN PATENT SPECIFICATION

(11) **EP 1 329 844 B1**
(45) Date of publication and mention of the grant of the patent: **06.06.2007**
(21) Application number: 03000738.9
(22) Date of filing: 13.01.2003
(51) Int. Cl.: G06K 19/077, G06K 19/10

(54) **Identification photograph with ID chip**
Passfoto mit einem ID-Chip
Photo d'identité comprenant un circuit d'identification

(30) Priority: 22.01.2002 JP 2002012565
(43) Date of publication of application: 23.07.2003
(73) Proprietor: Hitachi Electronic Service Co., Ltd., Yokohama-shi, Kanagawa (JP)
(72) Inventor: Habara, Takaaki, Totsuka-ku, Yokohama-shi, Kanagawa (JP); Yamagishi, Norikazu, Totsuka-ku, Yokohama-shi, Kanagawa (JP); Takesada, Mutsuharu, Totsuka-ku, Yokohama-shi, Kanagawa (JP); Imai, Mina, Totsuka-ku, Yokohama-shi, Kanagawa (JP)
(74) Representative: TER MEER - STEINMEISTER & PARTNER GbR

(56) References cited:
- WO-A-01/20564
- FR-A- 2 606 188
- PATENT ABSTRACTS OF JAPAN vol. 2000, no. 09, 13 October 2000 (2000-10-13) & JP 2000 163531 A (RYO MEISHIN), 16 June 2000 (2000-06-16)
- PATENT ABSTRACTS OF JAPAN vol. 2000, no. 22, 9 March 2001 (2001-03-09) & JP 2001 126046 A (KYODO PRINTING CO LTD), 11 May 2001 (2001-05-11)

## Description

### FIELD OF THE INVENTION

The present invention relates to an identification photograph having an ID chip embedded therein, the ID chip storing various personal identification data of the ID applicant so as to prevent forgery of the ID.

### DESCRIPTION OF THE RELATED ART

In general, an identification (ID) is a document that is published by a government office, corporation, school and the like so as to certify for example that an individual is an official at the government office, an employee of the corporation, a student at the school, and so on.

Various ID cards such as employee ID cards and student ID cards are widely known as IDs for identifying an individual, and other types of identifications such as passports, driver's licenses and health insurance cards are also used as IDs.

In many cases, an identification photograph composed of a photographic printing paper having printed thereto the facial photograph image of the individual applying for the ID is adhered on the identification card body for identifying the ID bearer. In other cases, the facial photograph image of the individual applying for the ID is directly printed on the ID card body.

Recently, for security reasons, outsiders visiting a government office, building of a corporation or school campus are prohibited from entering the premises etc. unless they present an ID.

Japanese Patent Laid-Open Publication No. 2000-158861 discloses a prior art card-like ID that is hard to forge, has a high credibility, can store various private information regarding the bearer, is handy to carry, and is suitable for official documentation.

According to prior art identification photographs, however, the facial photograph image of the ID applicant (ID bearer) is simply printed on the surface of a photographic printing paper.

Recently in Japan, the forgery of IDs has become cleverer, and fear of cunningly forged IDs being used in crimes is increasing.

However, according to the current system, the ID presented by an outsider at an entrance gate etc. of a facility is merely visually checked by a security guard and the like, who verifies whether or not the ID bearer is truly the individual identified by the ID by simply visually comparing the identification photograph on the ID with the ID bearer. Therefore, the check performed by the security guard on forged IDs used at the entrance gate etc. of a facility is not sufficient, and thus it is difficult to clamp down on illegal intruders at the entrance of the facility and to prevent them from entering.

According to the card-like certificate disclosed in Japanese Patent Laid-Open Publication No. 2000-158861, an antiforgery printing layer is formed on the upper face of a card base material incorporating an IC memory layer. The IC memory layer includes a personal information storage means storing the facial photograph image of the certificate bearer and other various data on the certificate bearer. The card-like certificate can be utilized as IDs, passports and other various certificates issued by public institutions.

WO 01/20564 discloses an identity card comprising a substrate. A photograph of the holder of the identity card and an IC chip are formed next to each other on the substrate. The IC chip stores information used to identity the card holder.

### SUMMARY OF THE INVENTION

The object of the present invention is to solve the problems of the prior art by providing an identification photograph with a particle-like ID chip. According to the identification photograph with an ID chip of the present invention, personal identification data for identifying the ID bearer are stored in a particle-like micro ID chip embedded in a photographic printing paper, and the identification photograph with an ID chip is adhered on an ID card and the like. The personal identification data stored in the ID chip can be read out using a dedicated ID chip reader and displayed on a screen of a display device, enabling the security guards and the like at the entrance of a facility to visually verify the individual data printed on the ID and the personal identification data of the ID owner read out from the ID chip and displayed on the screen so as to confirm that the ID bearer is truly the individual identified by the ID. Based on the personal data printed on the ID and the personal identification data stored in the ID chip, the security guard can determine whether the ID is forged or not, and can prevent illegal intruders using forged IDs from entering a facility.

According to the present invention, there is provided an identification photograph with a micro ID chip for identifying the identity of an individual, the photograph comprising a photographic printing paper onto which a facial photograph image of an individual applying for an ID is printed wherein the micro ID chip stores personal identification data for identifying the individual characterised in that the micro ID chip is embedded in the photographic printing paper.

According to the present identification photograph with an ID chip, the personal identification data stored in the ID chip include the applicant's ID number, name, sex, registered domicile, date of birth, height, current address, contact address, issue date of ID, and expiration date of ID.

According further to the present identification photograph with an ID chip, the personal identification data stored in the ID chip include a facial photograph data of the ID applicant comparable with said facial photograph image printed on the photographic printing paper.

According further to the present identification photograph with an ID chip, the personal identification data stored in the ID chip include a full-length photograph data of the ID applicant comparable with the facial photograph image printed on the photographic printing paper.

According even further to the present identification photograph with an ID chip, the ID chip is embedded in the center, the rim or the corner portion of the photographic printing paper.

According to the present identification photograph with an ID chip, the ID chip is embedded in a photograph face on which the facial photograph image is printed on the photographic printing paper.

According to the present identification photograph with an ID chip, the number of ID chips embedded in the photographic printing paper can be one or more.

According to the present identification photograph with an ID chip, a mark indicating that an ID chip is embedded therein is printed on the photographic printing paper.

According to the present identification photograph with an ID chip, a mark indicating where the ID chip is embedded is printed on the photographic printing paper.

### BRIEF DESCRIPTION OF THE DRAWINGS

FIG. 1 is a front view showing the identification photograph with an ID chip according to the first embodiment of the present invention;
FIG. 2 is a transverse cross-sectional view of the identification photograph with an ID chip according to the first embodiment of the present invention;
FIG. 3 is a front view showing the ID having the identification photograph with an ID chip adhered thereto;
FIG. 4 is a front view showing the identification photograph with an ID chip according to the second embodiment of the invention;
FIG. 5 is a front view showing the identification photograph with an ID chip according to the third embodiment of the invention;
FIG. 6 is a front view showing the identification photograph with an ID chip according to the fourth embodiment of the invention;
FIG. 7 is a front view showing the identification photograph with an ID chip according to the fifth embodiment of the invention;
FIG. 8 is a front view showing the identification photograph with an ID chip according to the sixth embodiment of the invention;
FIG. 9 is a front view showing the identification photograph with an ID chip according to the seventh embodiment of the invention;
FIG. 10 is a front view showing the identification photograph with an ID chip according to the eighth embodiment of the invention; and
FIG. 11 is a front view showing the identification photograph with an ID chip according to the ninth embodiment of the invention.

### DETAILED DESCRIPTION OF THE PREFERRED EMBODIMENT

Now, the preferred embodiments of the present invention are explained in detail with reference to the accompanied drawings.

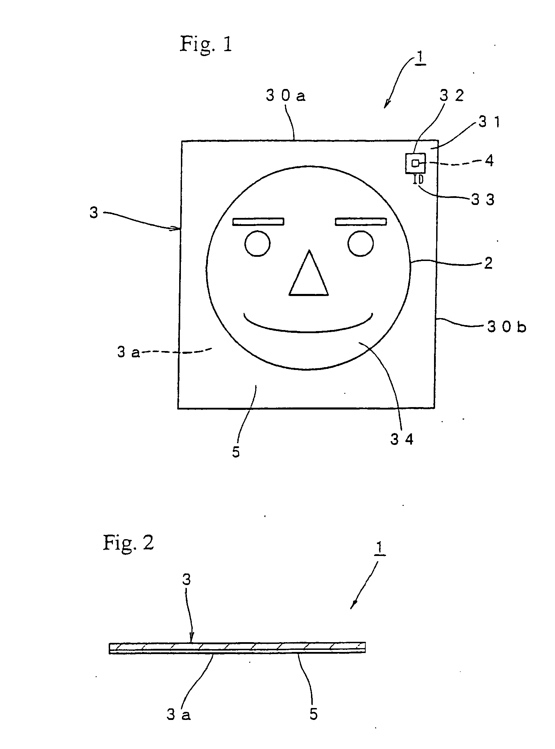

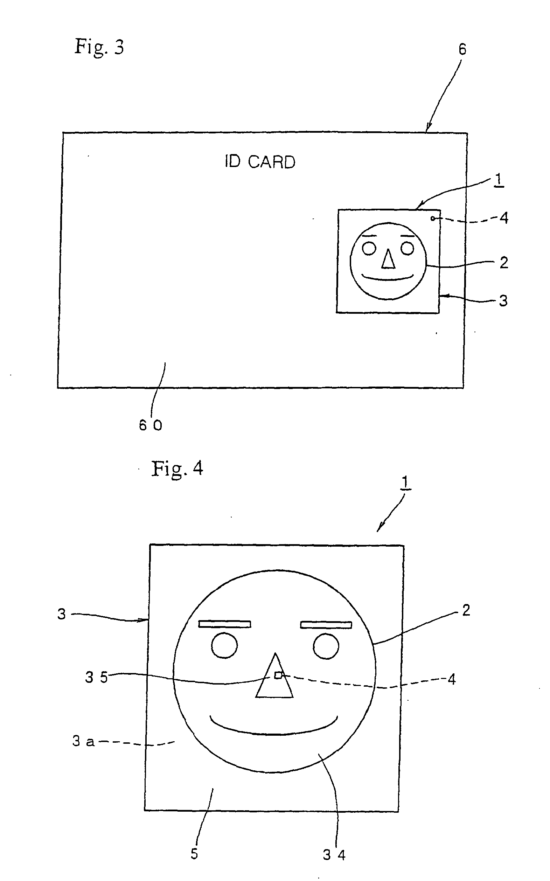

FIG. 1 is a front view showing the identification photograph with an ID chip according to embodiment 1 of the present invention, FIG. 2 is a cross-sectional side view showing the identification photograph with an ID chip according to embodiment 1, and FIG. 3 is a front view of an ID having adhered thereto the present identification photograph with an ID chip.

As shown in FIG. 1, the identification photograph with an ID chip according to the present invention comprises a photographic printing paper 3 having printed thereto a facial photograph image 2 of an ID applicant, and a particle-like micro ID chip 4 embedded in the photographic printing paper 3 storing personal identification data for identifying the individual.

As shown in FIG. 2, on the surface 3a of the photographic printing paper 3 of the identification photograph with an ID chip 1 is applied a photographic emulsion layer 5 composed of a photographic sensitive material and functioning as the photosensitive layer.

As shown in FIG. 1, one ID chip 4 is embedded in the photographic printing paper 3 of the identification photograph with an ID chip 1 at the corner portion 31 between an upper rim 30a and one side rim 30b.

The ID chip 4 embedded in the photographic printing paper 3 of the identification photograph 1 stores data such as the IDnumber, name, sex, registered domicile, date of birth, height, current address, contact address, issue date of ID and expiration date of ID as personal identification data for identifying the ID applicant.

As shown in FIG. 1, on the surface 3a of the photographic printing paper 3 of the identification photograph with an ID chip 1 is printed a mark 32 indicating that an ID chip 4 is embedded therein.

Moreover, on the surface 3a of the photographic printing paper 3 of the identification photograph 1 is further printed a mark 33 indicating where the ID chip 4 is embedded.

The ID chip 4 embedded in the photographic printing paper 3 of the identification photograph 1 is a particle-like micro IC (integrated circuit) chip which is capable of storing a number having 38 digits at maximum.

The size of the ID chip 4 is 0.4 × 0.4 mm square with a thickness of 0.06 mm. The embedded ID chip will not be damaged even if the photographic printing paper 3 is bent. The ID chip is equipped with a 128-bit ROM (read only memory).

According to the identification photograph with an ID chip 1 of the present invention, the personal identification data stored in the ID chip 4 includes the facial photograph information of the ID owner comparable with the facial photograph image 2 printed on the photographic printing paper 3.

According further to the present identification photograph with an ID chip 1, the personal identification data stored in the ID chip 4 includes a full-length photograph information of the ID applicant comparable with the facial photograph image 2 printed on the printing paper 3.

According to the present invention, the ID chip 4 is embedded either in the center port ion, the rimportion or the corner portion of the photographic printing paper 3.

According to another aspect of the present invention, the ID chip 4 is embedded in the photograph face 34 on which the facial photograph image 2 is printed in the photographic printing paper 3.

According to yet another aspect of the invention, the number of ID chips 4 embedded in the photographic printing paper 3 can be one, two or more.

Next, the method of using the identification photograph 1 with an ID chip will be explained.

First, when taking an identification photograph of the ID applicant, the personal identification data for identifying the ID applicant is recorded in the ID chip 4 embedded in the photographic printing paper 3 of the identification photograph with an ID chip 1. The personal identification data include the ID number, name, sex, registered domicile, date of birth, height, current address, contact address, issue date of ID, and expiration date of ID. Further, the facial photograph image 2 of the ID applicant printed on the photographic printing paper 3 of the photograph 1 is input using a scanner functioning as an image input device, and the scanned facial photograph data is recorded in the ID chip 4. Even further, a full-length photograph data of the ID applicant can be recorded in the ID chip 4 as personal identification data.

During the procedure of applying for issuance of an ID, the ID applicant hands in the identification photograph with an ID chip 1 and an ID application document to the government office, company, school etc. issuing the ID, to obtain an ID 6 composed of the identification photograph with an ID chip 1 being adhered to the card body 60, as shown in FIG. 3.

An outsider visiting a facility bears an ID having the identification photograph with an ID chip 1 adhered to the card body 60, and presents the ID 6 at the entrance of the facility.

The security guard at the entrance of the facility reads the personal identification data for identifying the ID bearer stored in the ID chip 4 embedded in the identification photograph using a dedicated ID chip reader via radio waves, so as to have the personal identification data including the ID number, name, sex, registereddomicile, date of birth, height, current address, contact address, issue date of ID and expiration date of ID together with the facial photograph information and the full-length photograph information of the ID owner displayed on the screen of the display device.

The guard at the entrance of the facility visually checks and compares the personal information printed on the card body 60 of the ID 6 with the personal identification data including the ID number, name, sex, registered domicile, date of birth, height, current address, contact address, issue date of ID, and expiration date of ID stored in the ID chip 4 and displayed on the screen, so as to determine whether the ID is forged or not. Thus, according to the present invention, security guards and the like assigned at the entrance of a facility can perform thorough checks on forged IDs, and they can prevent illegal intruders from entering the facility.

Further, the security guards can visually compare the facial photograph image 2 of the ID applicant printed on the photographic printing paper 3 with the facial photograph information of the ID applicant read out from the ID chip 4 and displayed on the screen, so as to confirm that the ID bearer is actually the individual who applied for the ID. Moreover, the security guard can determine whether the ID is forged or not by comparing the facial photograph image 2 printed on the printing paper 3 with the facial photograph information read out from the ID chip 4 and displayed on the screen.

Even further, the security guards can visually compare the whole figure of the ID bearer with the full-length photograph information of the ID applicant read out from the ID chip 4 and displayed on the screen, so as to confirm whether the ID bearer is actually the individual identified by the ID, and to further determine whether the ID is forged or not by comparing the whole figure of the ID bearer with the full-length photograph information of the ID applicant.

FIG. 4 is a front view showing the identification photograph with an ID chip according to a second embodiment of the present invention.

As shown in FIG. 4, a particle-like micro ID chip 4 storing personal identification data for identifying an individual is embedded in the center area 35 of the photographic printing paper 3 of the identification photograph with an ID chip 1.

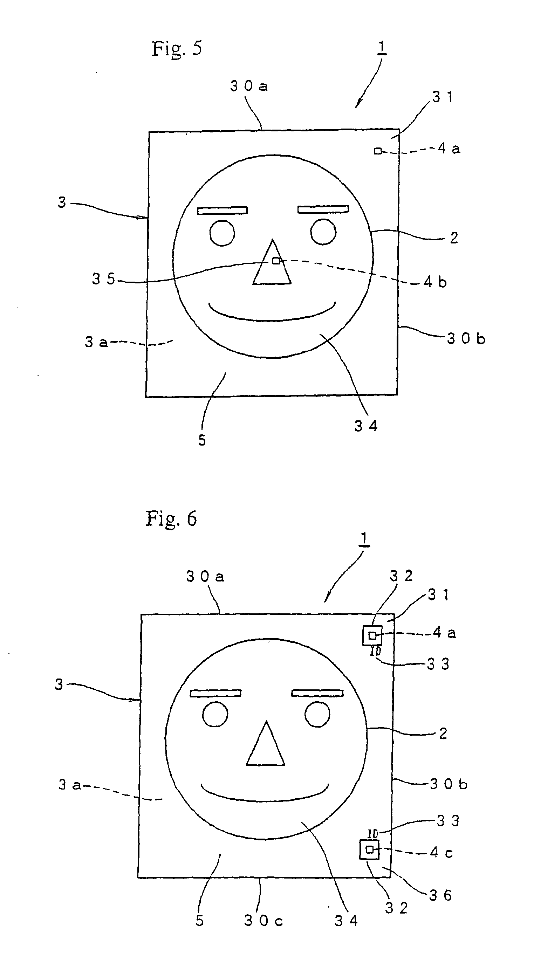

FIG. 5 is a front view showing the identification photograph with an ID chip according to a third embodiment of the present invention.

As shown in FIG. 5, particle-like micro ID chips 4a and 4b are embedded in the photographic printing paper 3, one at the corner portion 31 between the upper rim 30a and one side rim 30b, and one at the center portion 35.

FIG. 6 is a front view showing the identification photograph with an ID chip according to a fourth embodiment of the present invention.

As shown in FIG. 6, particle-like micro ID chips 4a and 4c are embedded in the photographic printing paper 3, one at the corner portion 31 between the upper rim 30a and one side rim 30b, and one at the corner portion 36 between the lower rim 30c and one side rim 30b.

Marks 32 indicating that ID chips 4a, 4c are embedded therein are printed on the surface 3a of the photographic printing paper 3, as shown in FIG. 6.

In addition, marks 33 indicating where the ID chips 4a, 4c are located are printed on the surface 3a of the photographic printing paper 3.

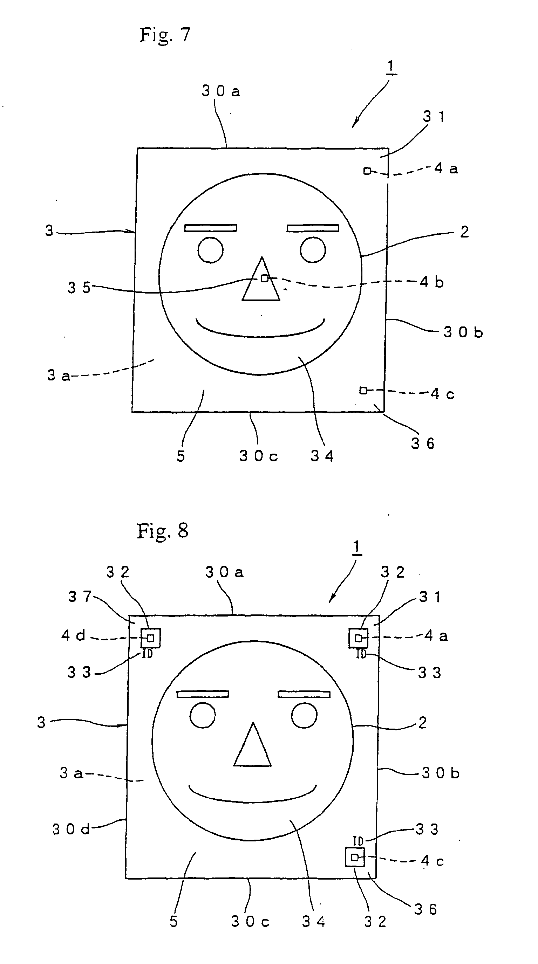

FIG. 7 is a front view showing the identification photograph with an ID chip according to a fifth embodiment of the present invention.

As shown in FIG. 7, particle-like ID chips 4a, 4b and 4c are embedded in the photographic printing paper 3 of the photograph 1, one at the corner portion 31 between the upper rim 30a and one side rim 30b, one at the center portion 35, and one at the corner portion 36 between the lower rim 30c and one side rim 30b.

FIG. 8 is a front view showing the identification photograph with an ID chip according to a sixth embodiment of the present invention.

As shown in FIG. 8, particle-like ID chips 4a, 4c and 4d storing various personal identification data are embedded in the photographic printing paper 3 of the photograph 1, one located at the corner portion 31 between the upper rim 30a and one side rim 30b, one at the corner portion 36 between the lower rim 30c and one side rim 30b, and one at the corner portion 37 between the upper rim 30a and the other side rim 30d.

As shown in FIG. 8, marks 32 indicating that ID chips 4a, 4c, 4d are embedded therein are printed on the surface 3a of the photographic printing paper 3.

Moreover, marks 33 indicating where the ID chips 4a, 4c, 4d are embedded are printed on the surface 3a of the photographic printing paper 3.

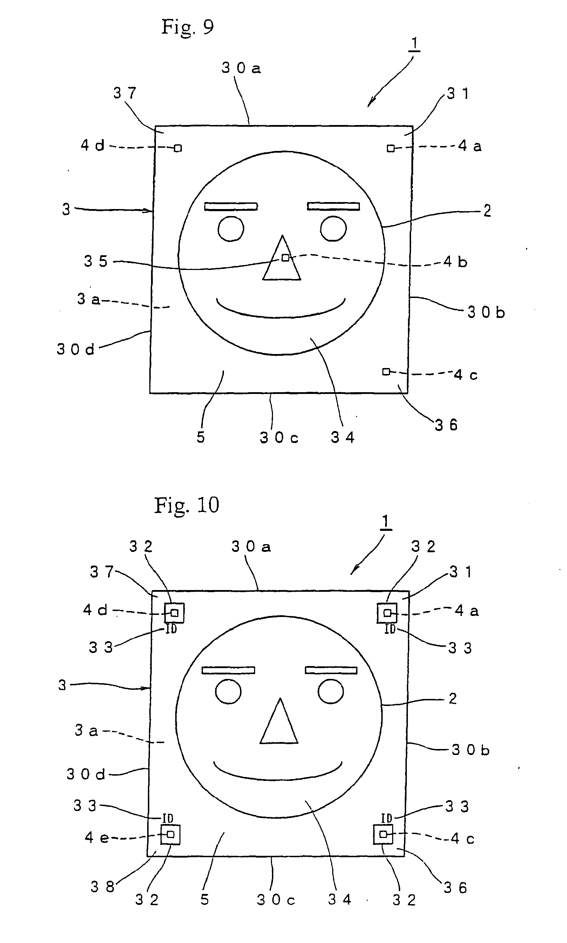

FIG. 9 is a front view showing the identification photograph with an ID chip according to the seventh embodiment of the present invention.

As shown in FIG. 9, particle-like micro ID chips 4a, 4b, 4c and 4d storing various personal identification data for identifying an individual are embedded in the photographic printing paper 3 of the photograph 1, one located at the corner portion 31 between the upper rim 30a and one side rim 30b, one at the center portion 35, one at the corner portion 36 between the lower rim 30c and one side rim 30b, and one at the corner portion 37 between the upper rim 30a and the other side rim 30d.

FIG. 10 is a front view showing the identification photograph with an ID chip according to the eighth embodiment of the present invention.

As shown in FIG. 10, particle-like micro ID chips 4a, 4c, 4d and 4e storing various personal identification data for identifying an individual are embedded in the photographic printing paper 3 of the photograph 1, one located at the corner portion 31 between the upper rim 30a and one side rim 30b, one at the corner portion 36 between the lower rim 30c and one side rim 30b, one at the corner portion 37 between the upper rim 30a and the other side rim 30d, and one at the corner portion 38 between the lower rim 30c and the other side rim 30d.

On the surface 3a of the photographic printing paper 3 of the identification photograph 1 are printed marks 32 indicating that ID chips 4a, 4c, 4d and 4e are embedded therein.

Further, marks 33 indicating where the ID chips 4a, 4c, 4d and 4e are embedded are also printed on the surface 3a of the photographic printing paper 3.

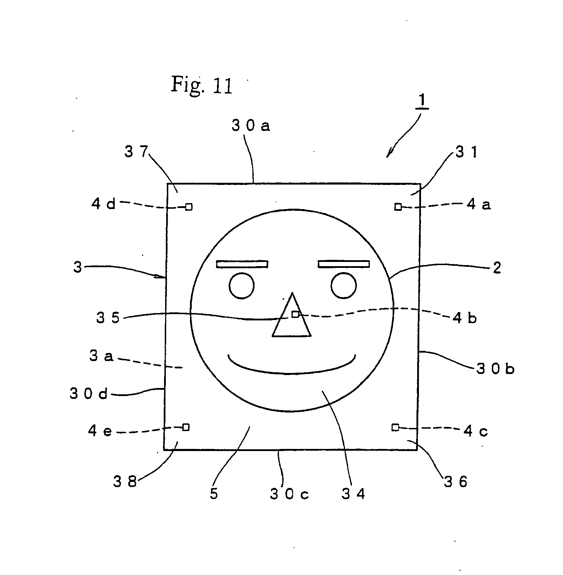

FIG. 11 is a front view showing the identification photograph with an ID chip according to the ninth embodiment of the present invention.

As shown in FIG. 11, particle-like micro ID chips 4a, 4b, 4c, 4d and 4e storing various personal identification data for identifying an individual are embedded in the photographic printing paper 3 of the photograph 1, one located at the corner portion 31 between the upper rim 30a and one side rim 30b, one at the center portion 35, one at the corner portion 36 between the lower rim 30c and one side rim 30b, one at the corner portion 37 between the upper rim 30a and the other side rim 30d, and one at the corner portion 38 between the lower rim 30c and the other side rim 30d.

The identification photograph with an ID chip explained above can be adhered on IDs, passports, driver's licenses, various membership IDs, health insurance cards, examination admission cards, and so on.

As explained, according to the present invention, one or more particle-like micro ID chips are embedded in a photographic printing paper of an identification photograph, so that personal identification data for identifying an individual (ID applicant) can be stored in the ID chip. The micro ID chip will not be damaged even if the photographic printing paper is bent or folded, and the chip has a large memory capacity, allowing various personal identification data to be stored therein. Forgery of IDs can be prevented by simply adhering the identification photograph on the IDs. Since the ID chip is much smaller than a rice grain, there is no special space required in the photographic printing paper for disposing the ID chip. By reading the personal identification data for identifying an individual stored in the ID chip using a dedicated ID chip reader and displaying the data on a screen, the security guard and the like at the entrance of a facility can compare the personal data printed on the ID with the personal identification data read out from the ID chip, so as to confirm that the ID bearer is actually the individual identified by the ID. Further, the guard can determine whether the ID is forged or not by comparing the data printed on the ID with the data stored in the ID chip. Thus, a more thorough check on forged IDs can be per formed at the entrance of a facility by guards and the like, improving the security of the facility and preventing illegal intruders from entering.

According to the identification photograph with an ID chip of the present invention, the ID chip stores personal identification data including the ID number, name, sex, registered domicile, date of birth, height, current address, contact address, issue date of ID, and expiration date of ID, and these personal identification data can be used effectively to judge whether the ID bearer is actually the individual identified by the ID.

According further to the identification photograph with an ID chip of the present invention, the personal identification data stored in the ID chip includes the facial photograph data of the ID applicant comparable with the facial photograph image printed on the photographic printing paper. Therefore, by reading out the facial photograph data from the ID chip using a dedicated ID chip reader and displaying the same on a screen, the guards etc. guarding the entrance of a facility can compare the facial photograph image of the ID applicant with the facial photograph data of the ID applicant read out from the ID chip and displayed on the screen so as to confirm whether the ID bearer is actually the individual identified by the ID. Further, guards etc. can determine whether the ID is forged or not by comparing the facial photograph image printed on the photographic printing paper with the facial photograph data of the ID applicant read out from the ID chip.

According further to the identification photograph with an ID chip of the present invention, the personal identification data stored in the ID chip includes the full-length photograph data of the ID applicant comparable with the facial photograph image printed on the photographic printing paper. Therefore, by reading out the full-length photograph data from the ID chip using a dedicated ID chip reader and displaying the same on a screen, the guards etc. at the entrance of a facility can compare the figure of the ID bearer with the full-length photograph date of the ID applicant read out from the ID chip and displayed on the screen so as to confirm whether the ID bearer is actually the individual identified by the ID. Further, guards etc. can determine whether the ID is forged or not by comparing the figure of the ID bearer with the full-length photograph data of the ID applicant read out from the ID chip.

According further to the present invention, the ID chip can be embedded in the center, the corners or the rim portions of the photographic printing paper, so the chip can be selectively located at any appropriate position within the printing paper.

According even further to the present invention, the ID chip can be embedded in the photograph face of the facial photograph image printed on the photographic printing paper, so the chip can be selectively located at any appropriate position within the photograph face of the printed image.

According further to the present invention, the number of ID chips embedded in the photographic printing paper can be one or more, so the number of chips can be selectively determined according to need.

According to the present invention, a mark indicating existence of an ID chip can be printed on the photographic printing paper, so the user can visually confirm that the identification photograph incorporates an ID chip for identifying an individual.

According to the present invention, a mark indicating where the ID chip is located can be printed on the photographic printing paper, so the user can visually check where the ID chip is embedded in the photograph.

## Claims

1. An identification photograph (1) with a micro ID chip (4,4a-e) for identifying the identity of an individual, the photograph comprising a photographic printing paper (3) onto which a facial photograph image(2) of an individual applying for an ID is printed; wherein
the micro ID chip stores personal identification data for identifying the individual **characterised in that** the micro ID chip is embedded in said photographic printing paper (3).

2. An identification photograph with a micro ID chip according to claim 1, wherein said personal identification data stored in said ID chip include the applicant's ID number, name, sex, registered domicile, date of birth, height, current address, contact address, issue date of ID, and expiration date of ID.

3. An identification photograph with a micro ID chip according to claim 1, wherein said personal identification data stored in said ID chip include a facial photograph data of the ID applicant comparable with said facial photograph image printed on said photographic printing paper.

4. An identification photograph with a micro ID chip according to claim 1, wherein said personal identification data stored in said ID chip include a full-length photograph data of the ID applicant comparable with said facial photograph image printed on said photographic printing paper.

5. An identification photograph with a micro ID chip according to claim 1, wherein said ID chip is embedded in the center, the rim or the corner portion of said photographic printing paper.

6. An identification photograph with a micro ID chip according to claim 1, wherein said ID chip is embedded in a photograph face on which said facial photograph image is printed on said photographic printing paper.

7. An identification photograph with a micro ID chip according to claim 1, wherein the number of ID chips embedded in said photographic printing paper can be one or more.

8. An identification photograph with a micro ID chip according to claim 1, wherein a mark (33) indicating that an ID chip is embedded therein is printed on said photographic printing paper.

9. An identification photograph with a micro ID chip according to claim 1, wherein a mark (32) indicating where the ID chip is embedded is printed on said photographic printing paper.

## Patentansprüche

1. Identifikationsfoto (1) mit einem Identifikations-Mikrochip (4,4a-e) zur Feststellung der Identität einer Person, welches Foto ein Foto-Druckpapier (3) umfasst, auf welches ein Portraitfoto (2) einer Person gedruckt ist, der eine Identifikation zuzuordnen ist, wobei der Identifikations-Mikrochip persönliche Identifikationsdaten zur Identifizierung der Person speichert, **dadurch gekennzeichnet, dass** der Identifikations-Mikrochip in das Foto-Druckpapier (3) eingebettet ist.

2. Identifikationsfoto mit einem Identifikations-Mikrochip gemäß Anspruch 1, bei welchem die persönlichen Identifikationsdaten, die in dem Identifikationschip gespeichert sind, die Identifikationsnummer der Person, den Namen, das Geschlecht, den registrierten Wohnsitz, das Geburtsdatum, die Größe, den derzeitigen Wohnsitz, die Kontaktadresse, das Ausstellungsdatum der Identifikation und das Ablaufdatum der Identifikation einschließen.

3. Identifikationsfoto mit einem Identifikations-Mikrochip gemäß Anspruch 1, bei welchem die persönlichen Identifikationsdaten, die in dem Identifikationschip gespeichert sind, Portraitfoto-Daten der zu identifizierenden Person einschließen, die mit dem Portraitfoto vergleichbar sind, das auf das Foto-Druckpapier gedruckt ist.

4. Identifikationsfoto mit einem Identifikations-Mikrochip gemäß Anspruch 1, bei welchem persönliche Identifikationsdaten, die in dem Identifikationschip gespeichert sind, vollständige fotografische Daten der zu identifizierenden Person umfassen, welche mit dem Portraitfoto vergleichbar sind, das auf das Foto-Druckpapier aufgedruckt ist.

5. Identifikationsfoto mit einem Identifikations-Mikrochip gemäß Anspruch 1, bei welchem der Identifikationschip in die Mitte, an den Rand oder in den Eckenbereich des Foto-Druckpapiers eingebettet ist.

6. Identifikationsfoto mit einem Identifikations-Mikrochip gemäß Anspruch 1, bei welchem der Identifikationschip in eine Foto-Seite eingebettet ist, auf welche das Portraitfoto auf das Foto-Druckpapier aufgedruckt ist.

7. Identifikationsfoto mit einem Identifikations-Mikrochip gemäß Anspruch 1, bei welchem die Anzahl der in das Foto-Druckpapier eingebetteten Identifikationschips Eins oder mehr betragen kann.

8. Identifikationsfoto mit einem Identifikations-Mikrochip gemäß Anspruch 1, bei welchem eine Markierung (33), die anzeigt, dass ein Identifikationschip eingebettet ist, auf das Foto-Druckpapier aufgedruckt ist.

9. Identifkationsfoto mit einem Identifikations-Mikrochip gemäß Anspruch 1, bei welchem eine Markierung (32), die anzeigt, wo der Identifikationschip eingebettet ist, auf das Foto-Druckpapier aufgedruckt ist.

## Revendications

1. Photographie d'identité (1) à micropuce de document d'identité (4, 4a-e) pour confirmer l'identité d'une personne, la photographie comprenant un papier d'impression photographique (3) sur lequel est imprimée une image (2) d'une photographie de face d'une personne demandant un document d'identité ;
la micropuce de document d'identité stockant des données personnelles d'identification pour identifier la personne, **caractérisée en ce que** la micropuce de document d'identité est incorporée dans ledit papier d'impression photographique (3).

2. Photographie d'identité à micropuce de document d'identité selon la revendication 1, dans laquelle lesdites données personnelles d'identification stockées dans ladite puce de document d'identité comprennent le numéro d'identité du demandeur, son nom, son sexe, son domicile officiel, sa date de naissance, sa taille, son adresse du moment, une adresse de contact, la date de délivrance du document d'identité et la date d'expiration du document d'identité.

3. Photographie d'identité à micropuce de document d'identité selon la revendication 1, dans laquelle lesdites données personnelles d'identification stockées dans ladite puce de document d'identité comprennent des données photographiques du visage du demandeur de document d'identité, comparables à ladite image photographique de face imprimée sur ledit papier d'impression photographique.

4. Photographie d'identité à micropuce de document d'identité selon la revendication 1, dans laquelle lesdites données personnelles d'identification stockées dans ladite puce de document d'identité comprennent des données de photographie en pied du demandeur de document d'identité, comparables à ladite image photographique de face imprimée sur ledit papier d'impression photographique.

5. Photographie d'identité à micropuce de document d'identité selon la revendication 1, dans laquelle ladite puce de document d'identité est incorporée au centre, sur le bord ou dans un angle dudit papier d'impression photographique.

6. Photographie d'identité à micropuce de document d'identité selon la revendication 1, dans laquelle ladite puce de document d'identité est incorporée dans une face de photographie sur laquelle ladite image photographique de face est imprimée sur ledit papier d'impression photographique.

7. Photographie d'identité à micropuce de document d'identité selon la revendication 1, dans laquelle le nombre de puces de document d'identité incorporées dans ledit papier d'impression photographique peut être égal ou supérieur à un.

8. Photographie d'identité à micropuce de document d'identité selon la revendication 1, dans laquelle un repère (33) indiquant qu'une puce de document d'identité est incorporée dans celle-ci est imprimé sur ledit papier d'impression photographique.

9. Photographie d'identité à micropuce de document d'identité selon la revendication 1, dans laquelle un repère (32) indiquant l'endroit où est incorporée la puce de document d'identité est imprimé sur ledit papier d'impression photographique.
